# EUROPEAN PATENT SPECIFICATION

(11) **EP 3 412 951 B1**
(45) Date of publication and mention of the grant of the patent: **24.02.2021**
(21) Application number: 17747181.0
(22) Date of filing: 16.01.2017
(51) Int. Cl.: F16L 11/08, F16L 11/127, B63B 27/24, G01M 3/18

(54) **MARINE HOSE STATUS MONITORING SYSTEM**
MARINESCHLAUCHZUSTANDSÜBERWACHUNGSSYSTEM
SYSTÈME DE SURVEILLANCE D'ÉTAT DE TUYAU MARIN

(30) Priority: 04.02.2016 JP 2016019913
(43) Date of publication of application: 12.12.2018
(73) Proprietor: The Yokohama Rubber Co., Ltd., Minato-ku Tokyo 105-8685 (JP)
(72) Inventor: ONO, Shunichi, Hiratsuka-shi, Kanagawa 254-8601 (JP); FUSE, Noriyuki, Hiratsuka-shi, Kanagawa 254-8601 (JP)
(74) Representative: Grünecker Patent- und Rechtsanwälte PartG mbB
(86) International application number: PCT/JP2017/001182
(87) International publication number: WO 2017/135019

(56) References cited:
- EP-A2- 1 182 441
- WO-A1-2007/119793
- JP-A- 2002 181 259
- JP-A- 2004 239 612
- JP-A- 2006 206 031
- JP-A- 2009 002 457
- JP-A- 2011 027 216
- US-A1- 2010 007 325
- US-B1- 6 644 848

## Description

### Technical Field

The present invention relates to a marine hose status monitoring system, and particularly relates to a marine hose status monitoring system capable of reliably determining the status of a marine hose even in harsh operating environments.

### Background Art

A marine hose is used when connecting an offshore tanker to an onshore facility to convey crude oil, or the like. The environment under which the marine hose is used is various and involves different natural environments, including wave, wind, and tide environments. These natural environments constantly change. For example, when a typhoon or the like approaches and waves increase in height, large external forces act on the marine hose from various directions. As a result, the marine hose undergoes elongation, bending, twisting, and other various deformations. When the external forces that act on the marine hose become extremely large, increasing deformation, there is a danger that the marine hose will become damaged. When the marine hose incurs fatal damage, the crude oil or the like conveyed through the marine hose escapes, diffusing into the surrounding area. It is therefore desirable to monitor whether the external forces acting on the marine hose are great enough to cause damage to the marine hose, and determine and avoid fatal damage to the marine hose in advance, regardless of the operating environment.

In the related art, a known marine hose is provided with an electrically conductive elastomer member embedded between an inner rubber layer constituting a hose body and a reinforcing layer disposed on an outer circumferential side thereof (refer to Patent Document 1). According to the marine hose proposed in this literature, the electrically conductive elastomer member swells when the conveyed fluid leaks from the inner rubber layer. With the swelling of the electrically conductive elastomer member, a resistance value increases, making it possible to detect the leakage of the fluid from the inner rubber layer by detecting a change in this resistance value. That is, according to this marine hose, abnormalities in the status of the marine hose cannot be determined in advance when fluid is not leaking from the inner rubber layer. Moreover, only the existence or nonexistence of fluid leakage from the inner rubber layer is detected, and thus neither the type of external force acting on the marine hose nor the type of deformation occurring in the marine hose can be determined. Hence, there is room for improvement in determining and avoiding fatal damage to the marine hose in advance.

Patent Document 2 relates to a marine hose capable of detecting liquid fuel gradually leaking, wherein the marine hose comprises a main body and a conductive elastomer member provided in the hose main body.

Patent Document 3 relates to a hose fault detection system including a hose assembly and a fault detector. The electrical characteristics between a first conductive layer and a second conductive layer of the hose body are detected.

### Citation List

### Patent Literature

Patent Document 1: JP 2009-2457 A
Patent Document 2: JP 2009-002457 A
Patent Document 3: US 2010/007325 A1

### Summary of Invention

### Technical Problem

An object of the present invention is to provide a marine hose status monitoring system capable of reliably determining the status of a marine hose even in harsh operating environments.

### Solution to Problem

A marine hose status monitoring system according to the present invention for achieving the above object is a monitoring system that determines a status of a marine hose including a hose body provided with an inner surface layer, a reinforcing layer disposed on an outer circumferential side of the inner surface layer, and an outer surface layer disposed on an outer circumferential side of the reinforcing layer; and a connection fitting connected to both end portions of the hose body in a longitudinal direction. The marine hose status monitoring system includes an electrically conductive rubber extending inside the outer surface layer which deforms, which causes to change an electrical value, a resistance detection mechanism that detects an electrical resistance value between at least two locations separated from one another in an extending direction of the electrically conductive rubber, and a storage unit that stores detection data detected by the resistance detection mechanism, wherein the electrically conductive rubber extends in the longitudinal direction of the hose body, and wherein a plurality of the electrically conductive rubbers are disposed separated from one another in a circumferential direction of the hose body.

### Advantageous Effects of Invention

According to the present invention, the electrically conductive rubber extends inside the outer surface layer constituting the hose body and thus, when an external force acts on the marine hose, causing deformation of the hose body, the electrical resistance value of the electrically conductive rubber changes. As a result, the electrical resistance value between at least two locations separated from one another in the extending direction of the electrically conductive rubber is detected by the resistance detection mechanism, and this detection data is analyzed, making it possible to determine the size of the external force that acted on the hose body. Further, a deformation mode of the hose body caused by the external force that acted thereon can be determined in accordance with an arrangement of the electrically conductive rubber of the hose body. That is, the status of the marine hose can be reliably determined on the basis of the detection data from the resistance detection mechanism, even in harsh operating environments. This makes it possible to determine and avoid fatal damage to the marine hose in advance.

The electrically conductive rubber extends in the longitudinal direction of the hose body. According to these specifications, a plurality of the electrically conductive rubbers are disposed separated from one another in a circumferential direction of the hose body. In this way, not only the degree of elongation deformation and swelling deformation of the hose body, but also the direction and the degree of bending deformation can be determined.

The specifications may also be configured so that the electrically conductive rubber extends while winding in a spiral-like manner around the hose body. According to these specifications, preferably two of the electrically conductive rubbers are disposed with winding directions opposite one another with respect to the hose body. In this way, the direction and degree of twisting deformation of the hose body can be determined.

The specifications may be configured so that, for example, the electrically conductive rubber is disposed across the entire longitudinal direction of the hose body. According to these specifications, deformation of the entire hose body can be comprehensively determined.

The specifications may also be configured so that the electrically conductive rubber is disposed only in a central portion of the hose body in the longitudinal direction. The central portion of the hose body in the longitudinal direction is a region susceptible to significant deformation compared to other regions and thus, according to these specifications, deformation of the hose body can be effectively determined while minimizing an amount of the electrically conductive rubber used.

The specifications may also be configured so that the marine hose status monitoring system further includes a transmission unit that wirelessly transmits detection data stored in the storage unit, and a receiving unit that receives the detection data transmitted from the transmission unit. According to these specifications, the status of the marine hose can be determined in real-time at a desired position away from the marine hose.

### Brief Description of Drawings

FIG. 1 is an explanatory diagram illustrating a marine hose status monitoring system according to an embodiment of the present invention.
FIG. 2 is an explanatory diagram illustrating a portion of the marine hose in FIG. 1 in a longitudinal sectional view.
FIGS. 3A to 3C are explanatory diagrams of the marine hose in FIG. 1 in a front view (arrow view from one connection fitting side to the other connection fitting side), illustrating cases with two, three, and four electrically conductive rubbers extended, respectively.
FIG. 4 is an explanatory diagram illustrating a hose line formed so as to connect the marine hoses.
FIG. 5 is an explanatory diagram illustrating the marine hose in FIG. 1 with bending deformation.
FIG. 6 is an explanatory diagram illustrating another layout example of the electrically conductive rubber.
FIG. 7 is an explanatory diagram illustrating a marine hose status monitoring system according to another embodiment.

### Description of Embodiments

A marine hose status monitoring system according to the present invention will be described below on the basis of embodiments illustrated in the drawings.

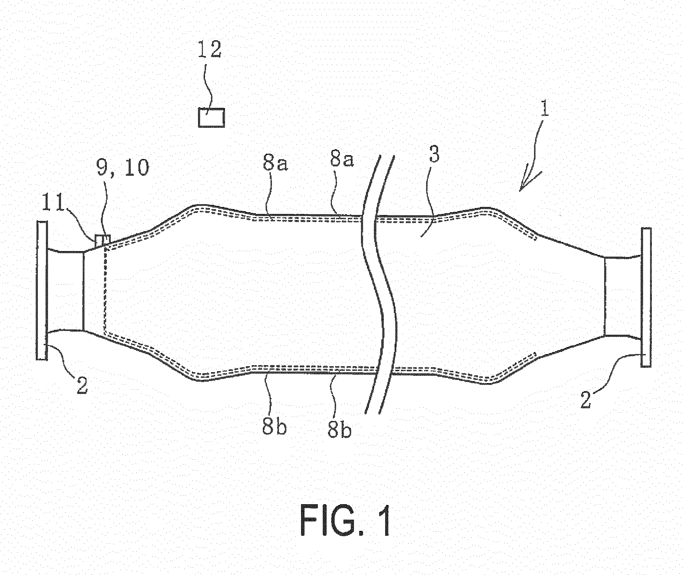

The marine hose status monitoring system (hereinafter referred to as "monitoring system") according to an embodiment of the present invention illustrated in FIGS. 1 to 3C includes a marine hose 1 having special specifications, a resistance detection mechanism 9 that detects an electrical resistance value, and a storage unit 10. The marine hose 1 includes a hose body 3 and a connection fitting 2 connected to each of both end portions of the hose body 3 in a longitudinal direction.

The hose body 3 includes an inner surface layer 4, a reinforcing layer 5 (a main reinforcing layer 5A and a body wire layer 5B) disposed on an outer circumferential side of the inner surface layer 4, and an outer surface layer 7 disposed on an outer circumferential side of the reinforcing layer 5. The hose body 3 is further suitably provided with other required members. The marine hose 1 of this embodiment is a floating type, and thus a buoyant layer 6 formed by a buoyant material such as sponge is interposed between the reinforcing layer 5 and the outer surface layer 7. The present invention may be applied not only to the marine hose 1 of a floating type, but also to a marine hose of a sub-marine type that does not include the buoyant layer 6.

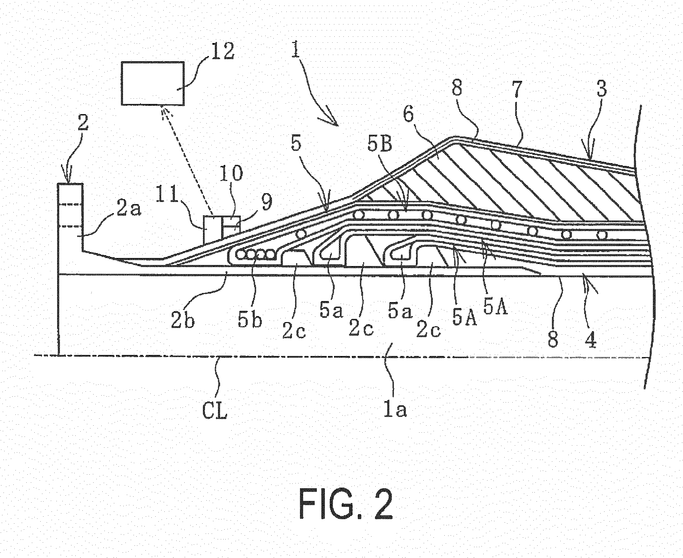

The connection fitting 2 includes a flange 2a that has a disc shape, and a nipple 2b that has a tubular shape, is bonded to the flange 2a and, on a leading edge portion side, and is inserted into the hose body 3. The inner surface layer 4, the main reinforcing layer 5A, and the body wire layer 5B are wound and layered around an outer circumference of the nipple 2b, in that order toward the outer circumferential side, with an outermost circumference being covered by the outer surface layer 7. An inner circumferential side of the inner surface layer 4 serves as a fluid flow path 1a. A line segment CL in FIG. 2 is a center line that extends in an axial direction of the marine hose 1.

The inner surface layer 4 that comes into contact with a fluid conveyed through the marine hose 1 is, for example, made from an acrylonitrile rubber or the like excellent in oil resistance, and the body wire layer 5B is configured by winding a metal wire around a rubber layer on an outer circumference of the main reinforcing layer 5A in a spiral-like manner at a predetermined interval. The main reinforcing layer 5A is configured by layering a plurality of reinforcing cord layers obtained by covering a reinforcing cord with rubber.

Nipple wires 5a, 5b of respective first end portions of the main reinforcing layer 5A and the body wire layer 5B are fixed to the nipple 2b by fixing rings 2c or the like projecting to an outer circumferential surface of the nipple 2b. The outer surface layer 7 is made from a non-water-permeable material such as rubber.

Then, the marine hose 1 further includes, as special specifications, an electrically conductive rubber 8 that extends inside the outer surface layer 7. The electrically conductive rubber 8 is a rubber material that contains an electrically conductive carbon. The resistance detection mechanism 9 detects an electrical resistance value between at least two locations separated from one another in an extending direction of the electrically conductive rubber 8. The storage unit 10 stores detection data detected by the resistance detection mechanism 9 upon input.

The resistance detection mechanism 9 and the storage unit 10 are, for example, attached to an outer circumferential side of the nipple 2b of the connection fitting 2, the flange 2a, or the hose body 3. In this embodiment, the electrically conductive rubber 8 extends from a first end portion to a second end portion of the hose body 3 in the longitudinal direction, loops back at the second end portion, and returns and extends to the first end portion. The first end portion and the second end portion of the electrically conductive rubber 8 in the longitudinal direction are each connected to the resistance detection mechanism 9 by a metal wire such as a lead wire.

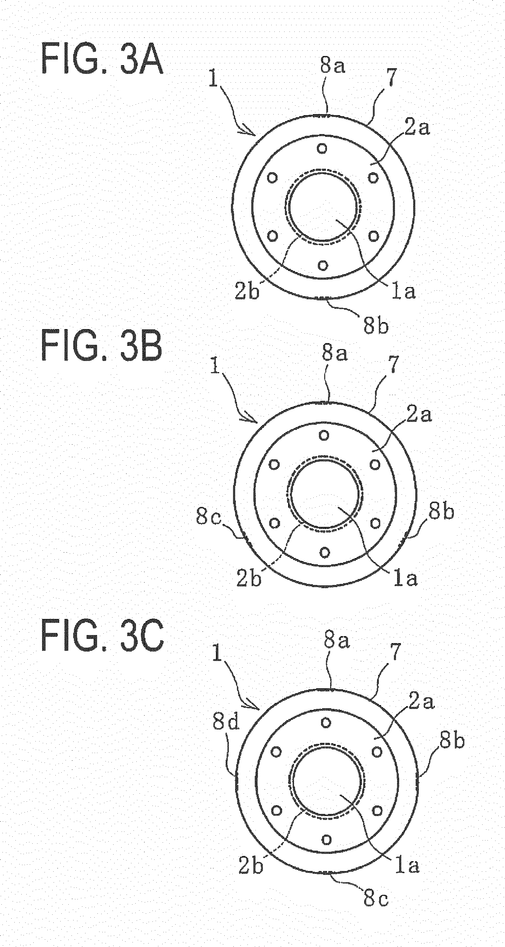

It is also possible to extend two electrically conductive rubbers 8a, 8b, separated from one another in the circumferential direction of the hose body 3, in the longitudinal direction of the hose body 3 as illustrated in FIG. 3A, or three electrically conductive rubbers 8a, 8b, 8c separated from one another in the circumferential direction as illustrated in FIG. 3B, or four electrically conductive rubbers 8a, 8b, 8c, 8d separated from one another in the circumferential direction as illustrated in FIG. 3C. Alternatively, five or more electrically conductive rubbers 8 can be extended, or the number can be set to one. However, when the number of extended electrically conductive rubbers 8 is excessively large, the manufacturing process becomes complex and additional advantages can no longer be expected, and thus the number is limited to about four. When a plurality of the electrically conductive rubbers 8 are extended, the electrically conductive rubbers 8 are disposed at an equal interval in the circumferential direction of the hose body 3.

In this embodiment, the marine hose 1 further includes a transmission unit 11 that wirelessly transmits detection data stored in the storage unit 10, and a receiving unit 12 that receives the detection data transmitted from the transmission unit 11. The resistance detection mechanism 9 periodically detects the electrical resistance value, and the detection data is successively input into the storage unit 10. For example, the resistance detection mechanism 9 successively detects the electrical resistance value. The transmission unit 11 periodically wirelessly transmits the detection data to the receiving unit 12. For example, the transmission unit 11 successively wirelessly transmits the detection data to the receiving unit 12. The receiving unit 12 can be disposed in a desired position.

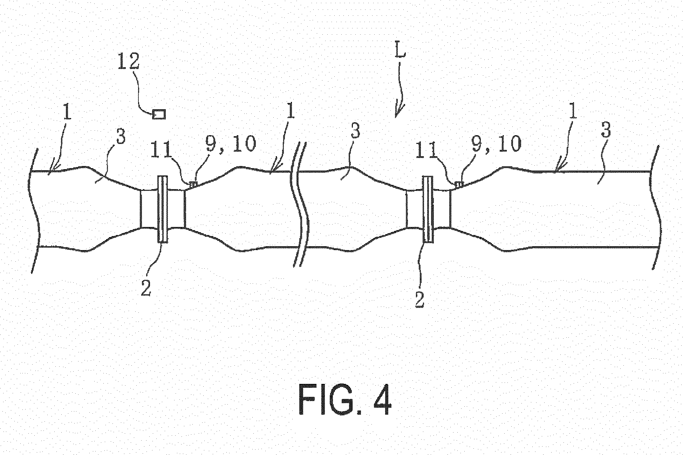

As illustrated in FIG. 4, a plurality of the marine hoses 1 are connected via the respective connection fittings 2, forming a hose line L. According to this embodiment, the hose line L is afloat on the ocean, and external forces act on the marine hoses 1 from waves, winds, and tides. As a result, the marine hose 1 undergoes elongation, bending, twisting, and other various deformations.

The method of using this monitoring system will be described below.

The electrically conductive rubber 8 embedded in the outer surface layer 7 deforms, changing the electrical resistance value. Specifically, the electrically conductive rubber 8 expands (becomes elongated) and contracts, causing the interval between the electrically conductive carbons contained therein to change, changing the electrical resistance value. Thus, when the electrically conductive rubber 8 becomes elongated, the electrical resistance value increases.

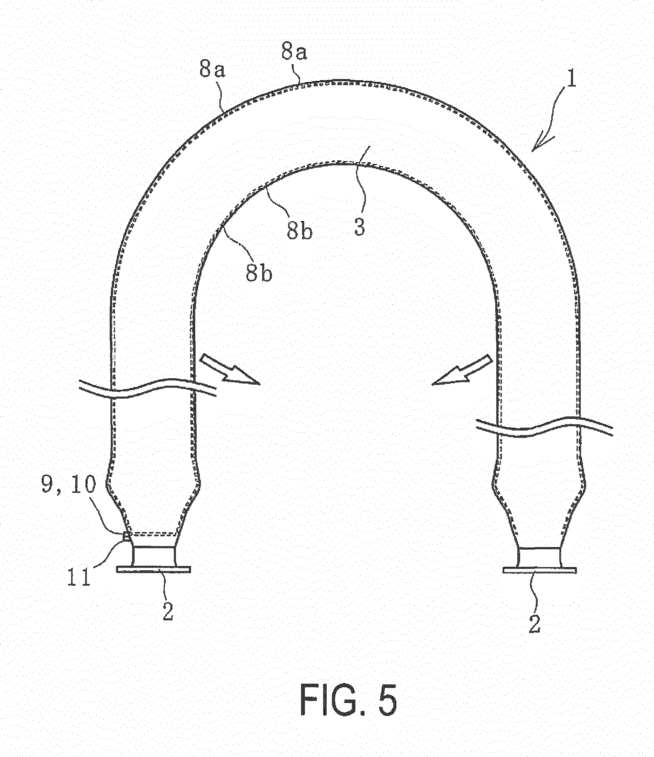

When an external force acts on the marine hose 1 as illustrated in FIG. 5, causing the hose body 3 to undergo bending deformation, the electrical resistance value of the electrically conductive rubber 8a disposed in a range where a tensile force acts on the hose body 3 and elongation occurs (a range on an outer circumferential side of a neutral plane of the bend) becomes large compared to when bending deformation does not occur. On the other hand, the electrical resistance value of the electrically conductive rubber 8b disposed in a range where a compression force acts on the hose body 3 and contraction occurs (a range on an inner circumferential side of the neutral plane of the bend) becomes relatively small.

Thus, when a plurality of (preferably three or more) electrically conductive rubbers 8, separated from one another in the circumferential direction of the hose body 3, are extended in the longitudinal direction, the electrical resistance values of these electrically conductive rubbers 8 are detected by the resistance detection mechanism 9, making it possible to determine the direction and the degree of bending deformation of the hose body 3. The greater the number of electrically conductive rubbers 8 disposed separated from one another in the circumferential direction of the hose body 3, the more precise the determination of the direction of bending deformation.

Additionally, when the hose body 3 is elongated in the longitudinal direction, the electrical resistance value of the electrically conductive rubber 8 becomes large compared to when the hose body 3 is not elongated. Thus, the electrical resistance value of the electrically conductive rubber 8 in a neutral state in which the hose body 3 is not elongated may be detected and determined in advance. Whether the hose body 3 undergoes elongation and the extent thereof can be determined by comparing the electrical resistance value detected by the resistance detection mechanism 9 and the electrical resistance value of the electrically conductive rubber 8 in a neutral state. Additionally, even when the hose body 3 undergoes excessive swelling deformation, the electrically conductive rubber 8 is elongated in the longitudinal direction of the hose body 3, causing the electrical resistance value of the electrically conductive rubber 8 to become large compared to when swelling deformation does not occur. As a result, whether the hose body 3 undergoes swelling deformation and the degree thereof can be determined.

When the plurality of electrically conductive rubbers 8 are separated from one another and extended in the circumferential direction, the electrical resistance values of all of the electrically conductive rubbers 3 increase when the hose body 3 simply undergoes elongation deformation or swelling deformation. This makes it possible to distinguish such a case from when the hose body 3 undergoes bending deformation. Whether the hose body 3 undergoes elongation and the extent thereof, and whether the hose body 3 undergoes swelling deformation and the extent thereof can be determined even when the number of electrically conductive rubbers 8 that are extended is one.

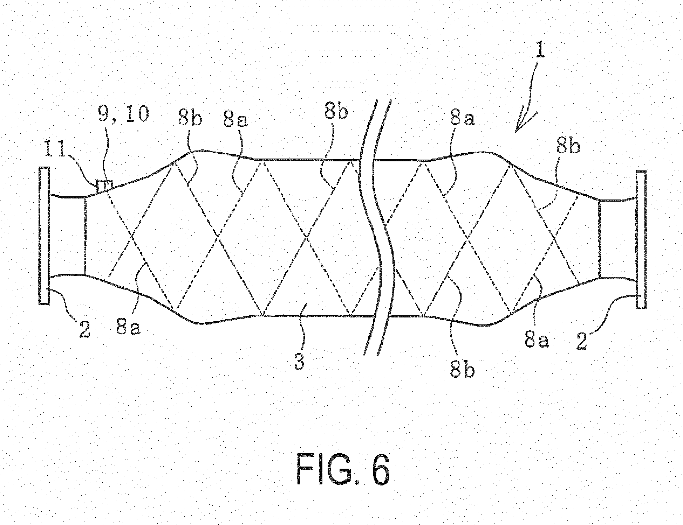

The electrically conductive rubber 8 can also be extended while wound in a spiral-like manner around the hose body 3, as illustrated in FIG. 6. Two of the electrically conductive rubbers 8a, 8b may be disposed with winding directions opposite to one another with respect to the hose body 3, as in this embodiment. The electrically conductive rubbers 8a, 8b are embedded in the outer surface layer 7 in different positions in a radial direction of the hose body 3 so as to not come into contact with one another. According to this embodiment, when the hose body 3 undergoes twisting deformation (twisting deformation about the center line CL), the electrically conductive rubber member 8 wound in a spiral-like manner in a twisting direction becomes elongated, causing the electrical resistance value to become large compared to when twisting deformation does not occur. When two electrically conductive rubber members 8 are extended in a spiral-like manner in opposite winding directions, the direction (whether the twisting deformation is clockwise or counterclockwise) and extent of the twisting deformation of the hose body 3 can be determined.

As described above, according to the present invention, the electrically conductive rubber 8 extends inside the outer surface layer 7, making it possible to determine the size of an external force that acts on the hose body 3 by detecting the electrical resistance value between at least two locations separated from one another in the extending direction of the electrically conductive rubber member 8 using the resistance detection mechanism 9, and analyzing this detection data. Further, a deformation mode of the hose body 3 caused by an external force that acted thereon can be determined in accordance with an arrangement of the electrically conductive rubber 8 of the hose body 3. That is, the status of the marine hose 1 can be reliably determined on the basis of the detection data from the resistance detection mechanism 9, even in harsh operating environments. This makes it possible to determine and avoid fatal damage of the marine hose 1 in advance.

The specifications may be configured so that, for example, the electrically conductive rubber 8 is disposed across the entire longitudinal direction of the hose body 3, as in this embodiment. According to these specifications, deformation of the entire hose body 3 can be comprehensively determined.

Alternatively, the electrically conductive rubber 8 may also be disposed only in a central portion of the hose body 3 in the longitudinal direction (for example, a range equivalent to 30% of the entire length of the hose body 3 centered about a center position of the hose body 3 in the longitudinal direction). The central portion of the hose body 3 in the longitudinal direction is a region susceptible to significant deformation compared to other regions and thus, according to these specifications, deformation of the hose body 3 can be effectively determined while minimizing the amount of the electrically conductive rubber 8, which is more expensive than general rubber. In this case, the first end portion and the second end portion of the electrically conductive rubber 8 in the longitudinal direction are each connected to the resistance detection mechanism 9 by a metal wire such as a lead wire.

According to this embodiment, the transmission unit 11 and the receiving unit 12 are provided, making it possible to arrange the receiving unit 12 in a vessel or an onshore facility, for example. In this way, the status of the marine hose 1 can be determined in real-time at a desired position away from the marine hose 1.

When the monitoring system is not provided with the transmission unit 11 and the receiving unit 12, the storage unit 10 is suitably replaced and removed from the marine hose 1. Then, the detection data is read from the storage unit 10 thus removed to determine the status of the marine hose 1.

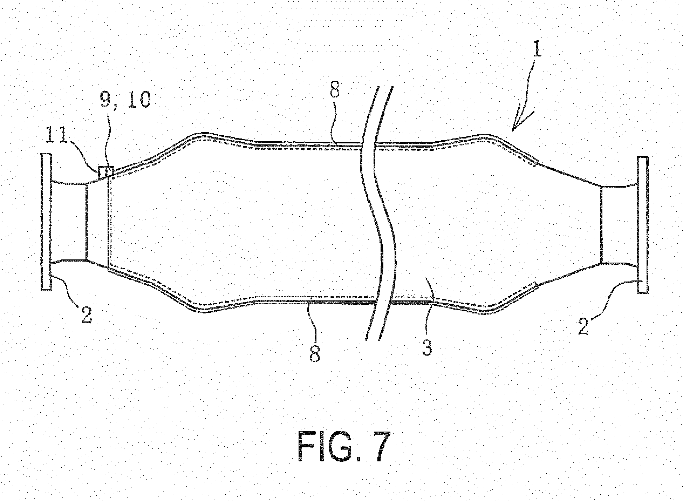

According to the embodiment illustrated in FIG. 7, the electrically conductive rubbers 8a, 8b extend from the first end portion to the second end portion of the hose body 3 in the longitudinal direction. Both end portions of the electrically conductive rubbers 8a, 8b in the longitudinal direction are each connected to the resistance detection mechanism 9 by a metal wire such as a lead wire. This metal wire is embedded in the outer surface layer 7, for example. According to this embodiment, while the used amount of the electrically conductive rubbers 8a, 8b can be reduced, a lead wire or the like for connection with the resistance detection mechanism 9 is required.

### Reference Signs List

- 1: Marine hose
- 1a: Fluid flow path
- 2: Connection fitting
- 2a: Flange
- 2b: Nipple
- 2c: Fixing ring
- 3: Hose body
- 4: Inner surface layer
- 5: Reinforcing layer
- 5A: Main reinforcing layer
- 5a: Nipple wire
- 5B: Body wire layer
- 5b: Nipple wire
- 6: Buoyant layer
- 7: Outer surface layer
- 8 (8a, 8b, 8c, 8d): Electrically conductive rubber
- 9: Resistance detection mechanism
- 10: Storage unit
- 11: Transmission unit
- 12: Receiving unit
- L: Hose line

## Claims

1. A marine hose status monitoring system that determines a status of a marine hose (1) comprising a hose body (3) provided with an inner surface layer (4), a reinforcing layer (5) disposed on an outer circumferential side of the inner surface layer (4), and an outer surface layer (7) disposed on an outer circumferential side of the reinforcing layer (5), and a connection fitting (2) connected to both end portions of the hose body (3) in a longitudinal direction, the marine hose status monitoring system comprising:
an electrically conductive rubber (8) that extends inside the outer surface layer (7) and deforms, which causes to change an electrical resistance value;
a resistance detection mechanism (9) that detects the electrical resistance value between at least two locations separated from one another in an extending direction of the electrically conductive rubber (8); and
a storage unit (10) that stores detection data detected by the resistance detection mechanism (9),
wherein the electrically conductive rubber (8) extends in the longitudinal direction of the hose body (3), and
wherein a plurality of the electrically conductive rubbers (8) are disposed separated from one another in a circumferential direction of the hose body (3).

2. The marine hose status monitoring system according to claim 1, wherein the electrically conductive rubber (8) extends while winding in a spiral-like manner around the hose body (3).

3. The marine hose status monitoring system according to claim 2, wherein two of the electrically conductive rubbers (8) are disposed with winding directions opposite to one another with respect to the hose body (3).

4. The marine hose status monitoring system according to any one of claims 1 to 3, wherein the electrically conductive rubber (8) is disposed across the entire longitudinal direction of the hose body (3).

5. The marine hose status monitoring system according to any one of claims 1 to 3, wherein the electrically conductive rubber (8) is disposed only in a central portion of the hose body (3) in the longitudinal direction.

6. The marine hose status monitoring system according to any one of claims 1 to 5, further comprising:
a transmission unit (11) that wirelessly transmits detection data stored in the storage unit (10); and
a receiving unit (12) that receives the detection data transmitted from the transmission unit.

## Patentansprüche

1. System zum Überwachen des Status eines Marineschlauchs, das einen Zustand eines Marineschlauchs (1) bestimmt, der einen Schlauchkörper (3), der mit einer inneren Oberflächenschicht (4), einer verstärkenden Schicht (5), die an einer Außenumfangsseite der inneren Oberflächenschicht (4) angeordnet ist, und einer äußeren Oberflächenschicht (7) versehen ist, die an einer Außenumfangsseite der verstärkenden Schicht (5) angeordnet ist, sowie ein Verbindungs-Anschlussstück (2) umfasst, das mit beiden Endabschnitten des Schlauchkörpers (3) in einer Längsrichtung verbunden ist, wobei das System zum Überwachen des Status eines Marineschlauchs umfasst:
einen elektrisch leitenden Gummi (8), der sich innerhalb der äußeren Oberflächenschicht (7) erstreckt und sich verformt und damit Änderung eines elektrischen Widerstandswertes bewirkt;
einen Widerstands-Erfassungsmechanismus (9), der den elektrischen Widerstandswert zwischen wenigstens zwei Stellen erfasst, die in einer Richtung voneinander getrennt sind, in der sich der elektrisch leitende Gummi (8) erstreckt; sowie
eine Speicher-Einheit (10), die durch den Widerstands-Erfassungsmechanismus (9) erfasste Erfassungs-Daten speichert,
wobei sich der elektrisch leitende Gummi (8) in der Längsrichtung des Schlauchkörpers (3) erstreckt, und
eine Vielzahl der elektrisch leitenden Gummis (8) in einer Umfangsrichtung des Schlauchkörpers (3) voneinander getrennt angeordnet ist.

2. System zum Überwachen des Status eines Marineschlauchs nach Anspruch 1, wobei sich der elektrisch leitende Gummi (8) spiralförmig um den Schlauchkörper (3) herum gewickelt erstreckt.

3. System zum Überwachen des Status eines Marineschlauchs nach Anspruch 2, wobei zwei der elektrisch leitenden Gummis (8) mit zueinander entgegengesetzten Wickelrichtungen in Bezug auf den Schlauchkörper (3) angeordnet sind.

4. System zum Überwachen des Status eines Marineschlauchs nach einem der Ansprüche 1 bis 3, wobei der elektrisch leitende Gummi (8) über die gesamte Längsrichtung des Schlauchkörpers (3) angeordnet ist.

5. System zum Überwachen des Status eines Marineschlauchs nach einem der Ansprüche 1 bis 3, wobei der elektrisch leitende Gummi (8) nur in einem Mittelabschnitt des Schlauchkörpers (3) in der Längsrichtung angeordnet ist.

6. System zum Überwachen des Status eines Marineschlauchs nach einem der Ansprüche 1 bis 5, das des Weiteren umfasst:
eine Sende-Einheit (11), die in der Speicher-Einheit (10) gespeicherte Erfassungs-Daten drahtlos sendet; und
eine Empfangs-Einheit (12), die die von der Sende-Einheit gesendeten Erfassungs-Daten empfängt.

## Revendications

1. Système de surveillance d'état de tuyau marin qui détermine l'état d'un tuyau marin (1), comprenant un corps de tuyau (3) pourvu d'une couche de surface interne (4), une couche de renfort (5) disposée sur un côté circonférentiel externe de la couche de surface interne (4), et une couche de surface externe (7) disposée sur un côté circonférentiel externe de la couche de renfort (5), et un raccord de connexion (2) connecté aux deux portions d'extrémité du corps de tuyau (3) en direction longitudinale, le système de surveillance d'état de tuyau marin comprenant :
un caoutchouc électroconducteur (8) qui s'étend à l'intérieur de la couche de surface externe (7) et se déforme, ce qui provoque un changement de la valeur de résistance électrique ;
un mécanisme de détection de résistance (9) qui détecte la valeur de résistance électrique entre au moins deux emplacements séparés en direction d'extension du caoutchouc électroconducteur (8) ; et
une unité de stockage (10) qui stocke des données de détection détectées par le mécanisme de détection de résistance (9),
dans lequel le caoutchouc électroconducteur (8) s'étend en direction longitudinale du corps de tuyau (3), et
dans lequel une pluralité de caoutchoucs électroconducteurs (8) est disposée de manière séparée en direction circonférentielle du corps de tuyau (3).

2. Système de surveillance d'état de tuyau marin selon la revendication 1, dans lequel le caoutchouc électroconducteur (8) s'étend tout en s'enroulant en spirale autour du corps de tuyau (3).

3. Système de surveillance d'état de tuyau marin selon la revendication 2, dans lequel deux des caoutchoucs électroconducteurs (8) sont disposés avec des directions d'enroulement opposées entre elles par rapport au corps de tuyau (3).

4. Système de surveillance d'état de tuyau marin selon l'une quelconque des revendications 1 à 3, dans lequel le caoutchouc électroconducteur (8) est disposé sur l'entièreté de la direction longitudinale du corps de tuyau (3) .

5. Système de surveillance d'état de tuyau marin selon l'une quelconque des revendications 1 à 3, dans lequel le caoutchouc électroconducteur (8) est disposé uniquement dans une portion centrale du corps de tuyau (3) en direction longitudinale.

6. Système de surveillance d'état de tuyau marin selon l'une quelconque des revendications 1 à 5, comprenant en outre :
une unité de transmission (11) qui transmet sans fil des données de détection stockées dans l'unité de stockage (10) ; et
une unité de réception (12) qui reçoit les données de détection transmises par l'unité de transmission.
